# EUROPEAN PATENT APPLICATION

(11) **EP 4 071 516 A1**
(43) Date of publication of application: **12.10.2022**
(21) Application number: 20896552.5
(22) Date of filing: 20.10.2020
(51) Int. Cl.: G01S 17/86, G01S 17/89

(54) **IMAGE PROCESSING DEVICE, MONITORING SYSTEM, AND IMAGE PROCESSING METHOD**

(30) Priority: 03.12.2019 JP 2019219019
(71) Applicant: KONICA MINOLTA, INC., Tokyo 100-7015 (JP)
(72) Inventor: MORIIZUMI, Kosuke, Tokyo, 100-7015 (JP)
(74) Representative: MFG Patentanwälte Meyer-Wildhagen Meggle-Freund Gerhard PartG mbB
(86) International application number: PCT/JP2020/039378
(87) International publication number: WO 2021/111747

(57) **Abstract**

An image processing device includes a first image acquisition unit (10) that acquires first image data including one distance image among a plurality of distance images generated temporally continuously, a second image acquisition unit (20) that acquires second image data including one camera image among a plurality of camera images temporally continuously generated at a frame rate different from a frame rate of the first image data, and a processing unit (60) that performs processing of associating information of a distance image included in the first image data with the second image data on the basis of a time at which the first image data is generated and a time at which the second image data is generated.

## Description

### Technical Field

The present disclosure relates to an image processing device, a monitoring system, and an image processing method.

### Background Art

There is known an image processing device that detects a position of an object present in an imaging area on the basis of an image captured by a camera or the like. This type of image processing device is expected to be applied to, for example, applications in which a position of a person or a working machine (hereinafter, collectively referred to as a "moving object") is accurately grasped, an action or a motion of the moving object is analyzed, and an action or a motion of the moving object is predicted.

There are various techniques for grasping the position of the moving object, and in particular, in the application of tracking of the moving object in which it is necessary to continuously recognize the same object, position measurement using a laser radar (also referred to as light detection and ranging (LiDAR)) is effective (see, for example, Patent Literature 1). Further, the laser radar is effective in that the moving object can be detected even at night and the like.

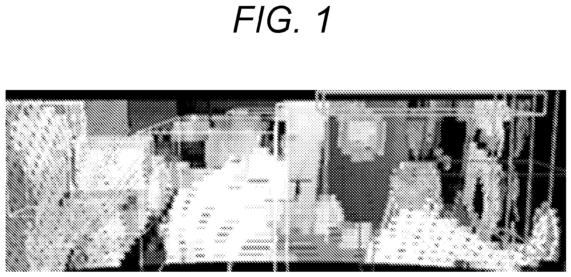

Fig. 1 is a diagram illustrating an example of a distance image generated on a laser radar.

In general, a laser radar projects laser light, and measures a time of flight (TOF) until the laser light is reflected by an object and returns to obtain a distance from its own position to the position of the object. Then, the laser radar performs such processing while scanning within a predetermined range where the monitoring target area appears, thereby generating image data related to the distance image. Such a distance image includes information on the three-dimensional position of each part of the moving object, and thus is useful for recognizing an attitude and motion of the moving object.

Patent Literature 1 discloses a technique of measuring a surrounding environment using the laser radar, clustering and analyzing point-grouped distance measurement points to recognize the moving object, and thereby grasping the position of the moving object.

### Citation List

### Patent Literature

Patent Literature 1: JP 2014-167702 A

### Summary of Invention

### Technical Problem

Incidentally, the distance image has lower resolution in the horizontal direction and the vertical direction than a camera image generated by a general visible camera, and does not include color information or the like of an object to be imaged. Thus, it is not desirable to provide the distance image as it is in order to allow the user to visually recognize the state of the monitoring target area.

In view of such a background, the inventors of the present application consider adding information of the moving object detected from the distance image to image data of the camera image. However, in order to implement such a configuration, it is necessary to specify a temporal correspondence relationship between the image data of the camera image and image data of the distance image generated at different frame rates.

The present invention has been made in view of the above problems, and an object thereof is to provide an image processing device, a monitoring system, and an image processing method capable of adding information of an object detected from a distance image to image data of a camera image.

### Solution to Problem

A main present invention for solving the above-described is an image processing device including:
a first image acquisition unit that acquires first image data including one distance image among a plurality of distance images generated temporally continuously;
a second image acquisition unit that acquires second image data including one camera image among a plurality of camera images temporally continuously generated at a frame rate different from a frame rate of the first image data; and
a processing unit that performs processing of associating information of a distance image included in the first image data with the second image data on the basis of a time at which the first image data is generated and a time at which the second image data is generated.

Further, in another aspect, it is a monitoring system including:
a laser radar that generates the first image data;
a camera that generates the second image data; and
the image processing device described above that associates the first image data generated by the laser radar with the second image data generated by the camera.

Further, in another aspect, it is an image processing method including:
acquiring first image data including one distance image among a plurality of distance images generated temporally continuously;
acquiring second image data including one camera image among a plurality of camera images temporally continuously generated at a frame rate different from a frame rate of the first image data; and
performing processing of associating information of a distance image included in the first image data with the second image data on the basis of a time at which the first image data is generated and a time at which the second image data is generated.

### Advantageous Effects of Invention

By an image processing device according to the present invention, it is possible to add information of an object detected from a distance image to image data of a camera image.

### Brief Description of Drawings

Fig. 1 is a diagram illustrating an example of a distance image generated by a laser radar.
Fig. 2 is a diagram illustrating an example of a monitoring system according to a first embodiment.
Fig. 3 is a diagram illustrating a hardware configuration of the image processing device according to the first embodiment.
Fig. 4 is a diagram illustrating functional blocks of the image processing device according to the first embodiment.
Fig. 5 is a diagram illustrating an example of information (moving object information) related to a moving object generated by the analysis unit according to the first embodiment.
Fig. 6 is a diagram describing processing of an object information adding unit according to the first embodiment.
Fig. 7 is a diagram illustrating an example of camera image data to which moving object information is added by the object information adding unit according to the first embodiment.
Fig. 8 is a diagram illustrating an example of the camera image data to which moving object information is added by the object information adding unit according to the first embodiment.
Fig. 9 is a flowchart illustrating an example of an operation of the object information adding unit according to the first embodiment.
Fig. 10 is a diagram illustrating an example of a configuration of an image processing device according to a second embodiment.
Fig. 11 is a diagram describing the operation of a data compression unit according to the second embodiment.
Fig. 12 is a flowchart illustrating an example of an operation of the data compression unit according to the second embodiment.

### Description of Embodiments

Hereinafter, preferred embodiments of the present disclosure will be described in detail with reference to the accompanying drawings. Note that, in the present description and the drawings, components having substantially the same function are denoted by the same reference numerals, and redundant description is omitted.

### (First embodiment)

### [Overall configuration of monitoring system]

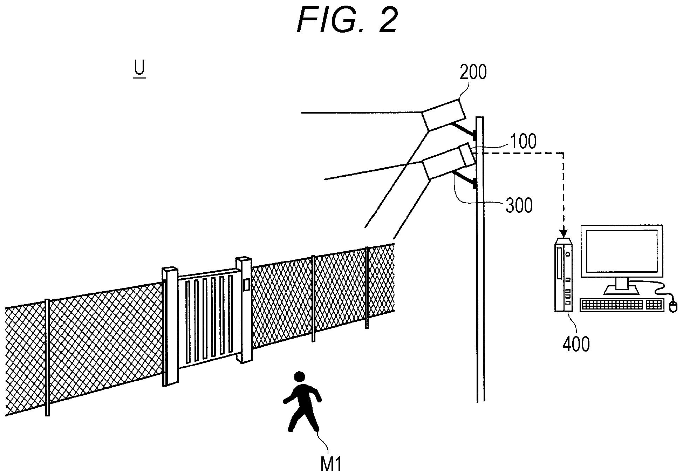

Hereinafter, an outline of a configuration of a monitoring system according to an embodiment and a configuration of an image processing device applied to a monitoring system will be described with reference to Figs. 2 to 3.

Fig. 2 is a diagram illustrating an example of a monitoring system U according to the present embodiment. The monitoring system U according to the present embodiment is applied to an application of detecting a moving object (here, a person M1) entering a monitoring target area.

The monitoring system U according to the present embodiment includes an image processing device 100, a laser radar 200, a camera 300, and a terminal device 400.

The laser radar 200 projects laser light, for example, and measures a time of flight (TOF) until the laser light is reflected by an object and returns to obtain the distance from its own position to the position of the object. The laser radar 200 performs such processing while scanning within a predetermined range where the monitoring target area appears, thereby generating image data related to a distance image (hereinafter abbreviated as "distance image data"). Then, the laser radar 200 continuously generates the distance image data in units of frames, and outputs the distance image data (that is, a moving image) arranged in time series to the image processing device 100. Note that the laser radar 200 continuously generates the distance image data at a frame rate of 10 frames per second (fps), for example.

The distance image is an image in which measurement data (for example, distance and reflection intensity) of the laser radar 200 is associated as a pixel value for each pixel with each scanning position being a pixel (also referred to as point cloud data). The distance image indicates a three-dimensional (for example, in the horizontal direction, the vertical direction, and the depth direction) position of the object in the monitoring target area, and for example, the existing position of the object is represented by a three-dimensional orthogonal coordinate system (X, Y, Z).

The camera 300 is, for example, a general visible camera, and performs AD conversion on an image signal generated by an imaging element included in the camera to generate image data related to a camera image (hereinafter referred to as "camera image data"). Then, the camera 300 continuously generates the camera image data in units of frames, and outputs the camera image data (that is, a moving image) arranged in time series to the image processing device 100. Note that the camera 300 continuously generates the camera image data at a frame rate of 30 fps, for example. Further, the camera 300 is configured to have a variable frame rate in a range of 30 fps to 120 fps, for example.

The camera image is, for example, an image in which luminance values (for example, luminance values of 256 gradations for each of RGB) for each of RGB are associated as pixel values for each pixel.

Note that the laser radar 200 and the camera 300 are installed at appropriate positions in the vicinity of the monitoring target area so as to image the same monitoring target area.

The image processing device 100 detects a moving object (In Fig. 2, the person M1) present in the monitoring target area on the basis of the distance image data generated by the laser radar 200. Then, the image processing device 100 adds information related to the moving object (for example, position information, movement trace information, size information, and the like) (hereinafter referred to as "moving object information") to the camera image data generated by the camera 300 and transmits the data to the terminal device 400.

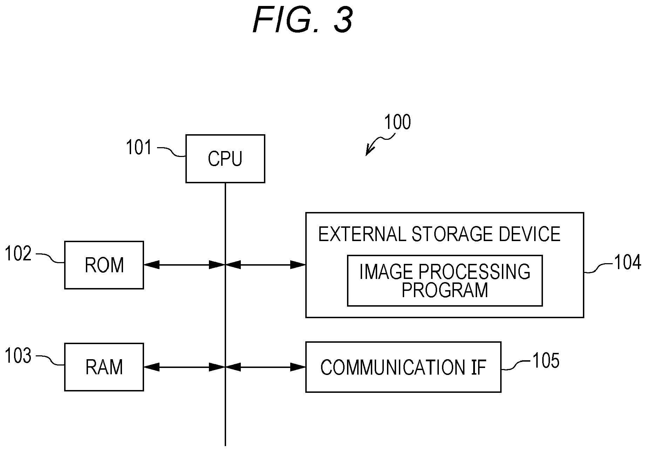

Fig. 3 is a diagram illustrating a hardware configuration of the image processing device 100 according to the present embodiment.

The image processing device 100 is a computer including, as main components, a central processing unit (CPU) 101, a read only memory (ROM) 102, a random access memory (RAM) 103, an external storage device (for example, flash memory) 104, a communication interface 105, and the like.

Each of functions to be described later of the image processing device 100 is achieved, for example, by the CPU 101 referring to a control program (for example, an image processing program) and various data stored in the ROM 102, the RAM 103, the external storage device 104, and the like. However, a part or all of the functions may be implemented by processing by a digital signal processor (DSP) instead of or in addition to the processing by the CPU. Further, similarly, a part or all of the functions may be implemented by processing by a dedicated hardware circuit (for example, ASIC or FPGA) instead of or in addition to processing by software.

Note that the image processing device 100 according to the present embodiment is disposed in a state of being incorporated in a housing of the camera 300. Then, the image processing device 100 is communicably connected to each of the laser radar 200 and the camera 300, and is configured to be capable of acquiring distance image data and camera image data from the laser radar 200 and the camera 300, respectively.

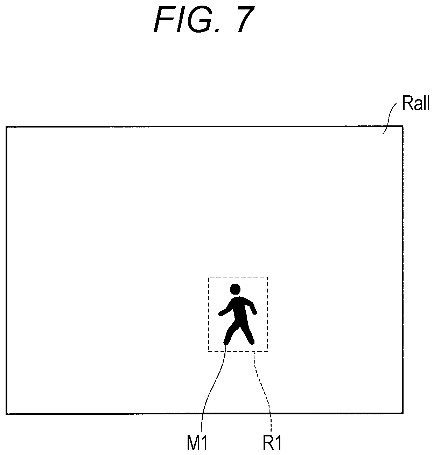

The terminal device 400 is a general computer, and displays the camera image data received from the image processing device 100 on a monitor. For example, the terminal device 400 displays, on the monitor, a composite image in which a marker indicating the position of the moving object detected in the monitoring target area is attached to the camera image (see Fig. 7).

### [Configuration of image processing device]

Next, an example of a configuration of the image processing device 100 according to the present embodiment will be described.

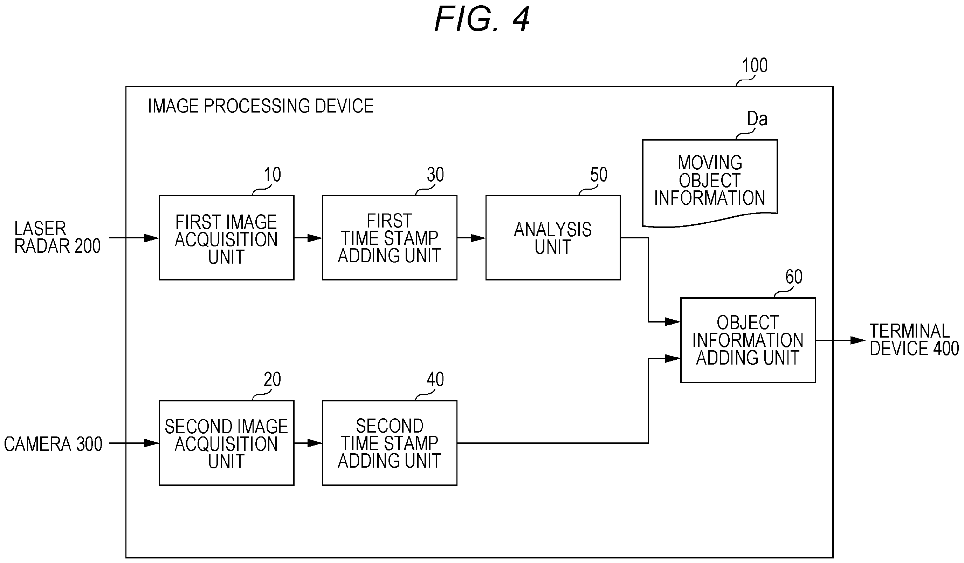

Fig. 4 is a diagram illustrating functional blocks of the image processing device 100 according to the present embodiment. Note that an arrow in Fig. 4 indicates a data flow.

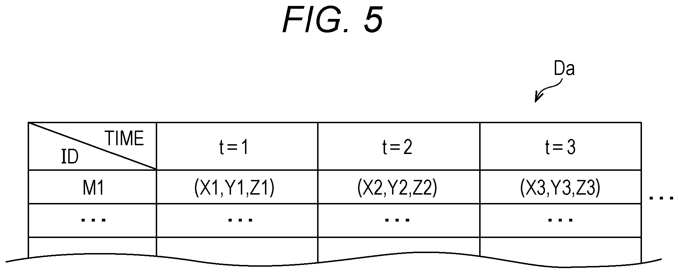

Fig. 5 is a diagram illustrating an example of information (moving object information) Da related to a moving object generated by the analysis unit 50. Note that Fig. 5 illustrates the position of a moving object in each claim, where ID represents an identification number of each moving object, and t = 0, t = 1, t = 2 ... represent a frame number.

The image processing device 100 includes a first image acquisition unit 10, a second image acquisition unit 20, a first time stamp adding unit 30, a second time stamp adding unit 40, an analysis unit 50, and an object information adding unit 60.

The first image acquisition unit 10 sequentially acquires distance image data temporally continuously generated from the laser radar 200. That is, the first image acquisition unit 10 sequentially acquires distance image data at intervals of the frame rate (here, 10 fps) at which the distance image data is generated.

The second image acquisition unit 20 sequentially acquires the camera image data temporally continuously generated from the camera 300. That is, the second image acquisition unit 20 sequentially acquires the camera image data at intervals of the frame rate (here, 30 fps) at which the camera image data is generated.

When the first image acquisition unit 10 acquires the distance image data, the first time stamp adding unit 30 adds a time stamp to the distance image data. The laser radar 200 sequentially transmits the distance image data generated by itself to the image processing device 100, and the time stamp added to each piece of the distance image data by the first time stamp adding unit 30 indicates the timing at which each piece of the distance image data is generated.

When the second image acquisition unit 20 acquires the camera image data, the second time stamp adding unit 40 adds a time stamp to the image data. The camera 300 sequentially transmits the camera image data generated by itself to the image processing device 100, and the time stamp added to each piece of the camera image data by the second time stamp adding unit 40 indicates the timing at which each piece of the camera image data is generated.

Note that the first time stamp adding unit 30 and the second time stamp adding unit 40 add a time indicated by a clocking unit (not illustrated) incorporated in the image processing device 100 to the image data as the time stamp. That is, the time stamp added to the distance image data and the time stamp added to the camera image data indicate a time on a common time axis. Note that the clocking unit incorporated in the image processing device 100 clocks in units of milliseconds so as to be capable of specifying, for example, the generation timing of each piece of the distance image data of the time-series distance image data and the generation timing of each piece of the camera image data of the time-series camera image data.

The analysis unit 50 detects a moving object present in the monitoring target area on the basis of the distance image data arranged in time series, and generates the moving object information Da.

Specifically, the analysis unit 50 detects a moving object appearing in each frame of the distance image data arranged in time series, assigns an ID to each moving object, and stores a position where the moving object exists in association with the ID. The method by which the analysis unit 50 detects the moving object from a distance image may be any known method. For example, the analysis unit 50 may detect the moving object by taking a difference between the frame of interest and the previous frame. Further, for example, the analysis unit 50 may detect a moving object (for example, a person or a vehicle) by pattern matching on the basis of feature amounts (for example, shape, size, and the like) of a cluster of distance measurement points in the distance image.

Further, for example, the analysis unit 50 calculates the degree of relevance between the moving object detected in the frame of interest and the moving object detected in the previous frame, and determines the identity between the moving object detected in the frame of interest and the moving object detected in the previous frame on the basis of the degree of relevance. Then, at this time, when the moving object detected in the frame of interest and the moving object detected in the previous frame are the same, the analysis unit 50 assigns the same ID as the moving object detected in the previous frame to the moving object detected in the frame of interest, and when the moving object detected in the frame of interest and the moving object detected in the previous frame are not the same, the analysis unit assigns a new ID to the moving object detected in the frame of interest. In this manner, the analysis unit 50 detects and tracks each moving object appearing in each frame.

Note that the method by which the analysis unit 50 determines the identity of each moving object between different frames may be any known method. The analysis unit 50 calculates the degree of relevance between the object detected in the frame of interest and the object detected in the previous frame on the basis of, for example, the distance between the object detected in the frame of interest and the object detected in the previous frame, a similarity in size between the objects, a similarity in shape between the objects, a similarity in color between the objects, a similarity in moving speed between the objects, and the like. Then, in a case where the relation is equal to or more than a predetermined value, the analysis unit 50 determines that the moving object detected in the frame of interest and the moving object detected in the previous frame are the same.

The moving object information Da generated by the analysis unit 50 is, for example, data indicating the position (here, a three-dimensional coordinate position) of the moving object in each frame of the distance image data arranged in time series as illustrated in Fig. 5. Note that the moving object information Da may include information of the size of the moving object, information related to an area where the moving object exists, information related to the type of the moving object, and the like.

The object information adding unit 60 (corresponding to a "processing unit" of the present invention) adds the moving object information Da generated on the basis of the distance image data to the camera image data. At this time, the object information adding unit 60 specifies the temporal correspondence relationship between the generation timing of the distance image data and the generation timing of the camera image data on the basis of the time of the time stamp added to the distance image data and the time of the time stamp added to the camera image data. Thus, the object information adding unit 60 adds the moving object information Da to the camera image data generated at substantially the same timing as the timing at which the distance image data that is the source of the moving object information Da is generated.

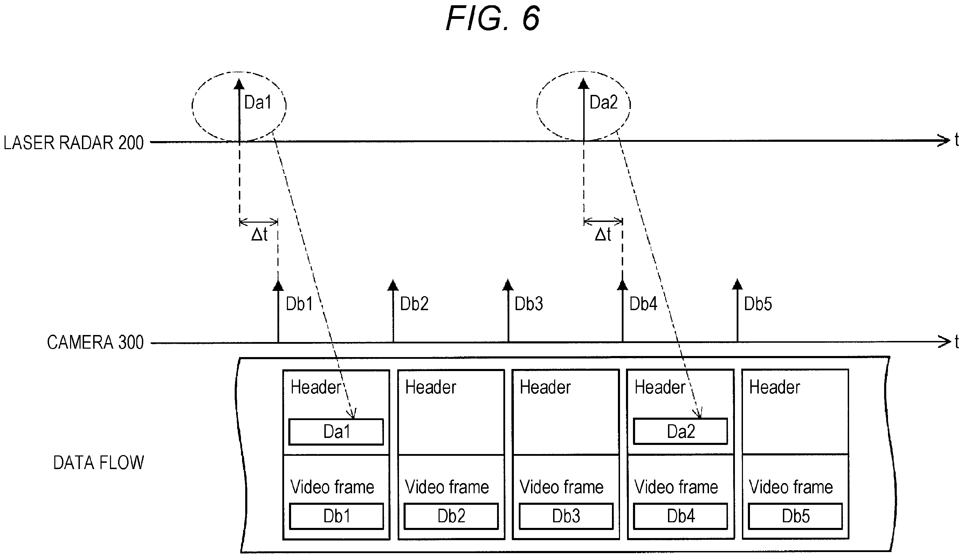

Fig. 6 is a diagram describing processing of the object information adding unit 60. Fig. 6 illustrates a time chart illustrating a timing (here, the timing at which the time stamp is added by the first time stamp unit 30) at which the laser radar 200 generates the distance image data, a time chart illustrating a timing (here, the timing at which the time stamp is added by the second time stamp unit 40) at which the camera 300 generates the camera image data, and a data flow of the camera image data to which the moving object information Da is added on a common time axis.

Note that Da1 and Da2 in Fig. 6 represent the moving object information Da related to the distance image data generated at the timing indicated by the arrow. Further, Db1, Db2, Db3, Db4, and Db5 in Fig. 6 represent the camera image data generated at timing indicated by arrows.

Specifically, the object information adding unit 60 compares the time of the time stamp attached to each of the distance image data arranged in time series with the time of the time stamp attached to each of the camera image data arranged in time series, and determines simultaneity between the generation timing of the distance image data and the generation timing of the camera image data on the basis of whether or not a difference (Δt) is within a reference time width. Then, when the difference (Δt) is within the reference time width, the object information adding unit 60 specifies that the generation timing of the distance image data and the generation timing of the camera image data are substantially the same timing, and adds the moving object information Da related to the distance image data to the camera image data.

Note that, as the "reference time width" for specifying the temporal correspondence relationship between the distance image data and the camera image data, for example, a time width (for example, 9 msec) shorter than the frame interval at which the distance image data is generated and shorter than the frame interval at which the camera image data is generated is set.

Fig. 6 illustrates a mode in which the object information adding unit 60 stores the moving object information Da1 in a header storage area of the camera image data Db1 and stores the moving object information Da2 in a header storage area of the camera image data Db4. Here, the object information adding unit 60 adds (that is, stores) only the moving object information Da to the camera image data, but the object information adding unit 60 may attach (that is, stores) the distance image data in addition to the moving object information Da to the camera image data.

Note that the object information adding unit 60 refers to, for example, the time-series distance image data output from the analysis unit 50 and the moving object information Da of the distance image data, and the memory (for example, the RAM 103) in which the time-series camera image data output from the first time stamp adding unit 30 is temporarily stored, and specifies the correspondence relationship between the generation timing of the distance image data and the generation timing of the camera image data.

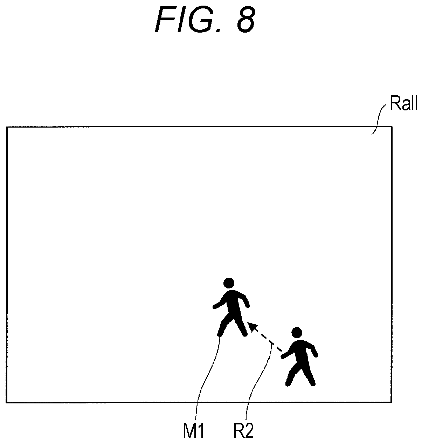

Figs. 7 and 8 are diagrams illustrating another example of the camera image data to which the moving object information Da is added by the object information adding unit 60. Figs. 7 and 8 are composite images in which a marker generated on the basis of moving object information Da is added to a camera image. In Figs. 7 and 8, Rall is the entire image area of the camera image, R1 is a marker indicating the existing position of the moving object M1, and R2 is a marker indicating a movement trace of the moving object M1.

As a mode in which the object information adding unit 60 adds the moving object information Da to the camera image data, as illustrated in Figs. 7 and 8, a composite image in which a marker generated on the basis of the moving object information Da is added to the camera image may be generated. Fig. 7 illustrates a mode in which the object information adding unit 60 specifies the existing position of the moving object appearing in the camera image on the basis of the moving object information Da, and generates a composite image in which a marker indicating the existing position of the moving object is superimposed on the camera image. Further, Fig. 8 illustrates a mode in which the object information adding unit 60 specifies a movement trace of the moving object appearing in the camera image on the basis of the moving object information Da, and generates a composite image in which a marker indicating the movement trace of the moving object is superimposed on the camera image.

Such a mode is achieved, for example, by that a conversion formula for performing coordinate conversion from a position (here, the position of the three-dimensional coordinates) in the image of the distance image to a position (here, the position of the two-dimensional coordinates) in the image of the camera image is stored in the ROM 102 or the like in advance, and the object information adding unit 60 refers to the conversion formula.

Note that when the object information adding unit 60 generates a composite image in which a marker is superimposed on a camera image, the marker may be, for example, size information of a moving object, information related to a distance between the moving object and the laser radar 200, or the like.

However, the mode in which the object information adding unit 60 adds the moving object information Da to the camera image data is not limited to the mode of generating the composite image as illustrated in Figs. 7 and 8, and may be such that data of the moving object information Da is associated with the camera image data.

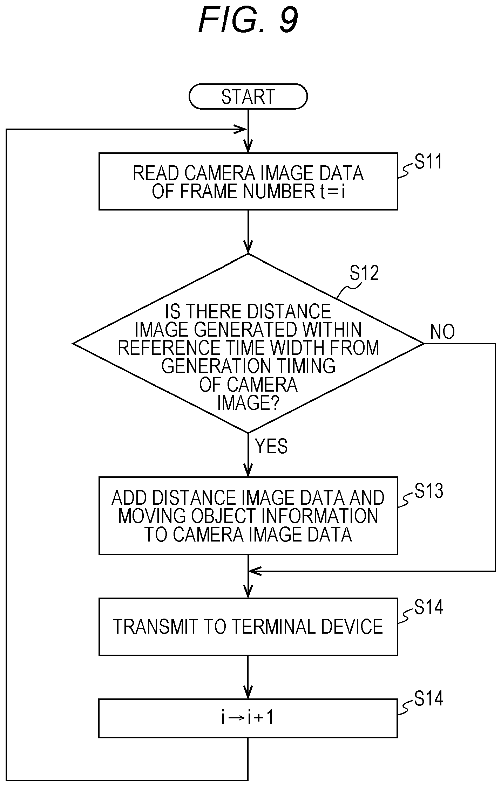

Fig. 9 is a flowchart illustrating an example of the operation of the object information adding unit 60. The flowchart illustrated in Fig. 9 is, for example, processing executed according to a computer program.

In step S11, the object information adding unit 60 reads the camera image data of the frame number t = i.

Next, in step S12, the object information adding unit 60 determines whether or not the distance image data that is generated within the reference time width (for example, 9 msec) from a timing at which the camera image data is generated exists (that is, the time indicated by the time stamp). Then, in a case where there is distance image data generated within the reference time width from the timing at which the camera image data is generated (S12: YES), the processing is advanced to step S13, and in a case where there is no distance image data generated within the reference time width from the timing at which the camera image data is generated (S12: NO), the processing is advanced to step S14. Note that, at this time, as described above, the object information adding unit 60 performs the determination processing by comparing the time stamp attached to the camera image data with the time stamp attached to the distance image data.

Next, in step S13, the object information adding unit 60 adds the moving object information Da of the distance image data specified in step S12 to the camera image data.

Next, in step S14, the object information adding unit 60 transmits the camera image data to the terminal device 400.

Next, in step S15, the object information adding unit 60 increments the frame number of the processing target, returns to step S11, and executes the processing related to the camera image data at the next time.

By repeatedly executing such processing, the image processing device 100 sequentially adds the moving object information Da detected from the distance image data to the time-series camera image data while synchronizing the camera image data and the distance image data.

### [Effects]

As described above, the image processing device 100 according to the present embodiment includes:
a first image acquisition unit 10 that sequentially acquires distance image data temporally continuously generated from a laser radar 200 that monitors a predetermined area;
a second image acquisition unit 20 that sequentially acquires camera image data temporally continuously generated from a camera that monitors a predetermined area;
a first time stamp adding unit 30 that adds a time stamp to the distance image data when the distance image data is acquired;
a second time stamp adding unit 40 that adds a time stamp to the camera image data when the camera image data is acquired; and
an object information adding unit 60 that specifies a temporal correspondence relationship between a generation timing of the distance image data and a generation timing of the camera image data on the basis of the time of the time stamp added to the distance image data and the time of the time stamp added to the camera image data, and adds moving object information Da in a predetermined area detected on the basis of the distance image data to the camera image data.

Thus, the moving object information Da can be accurately added to the camera image data generated at substantially the same timing as the timing at which the distance image data that is the source of the moving object information Da is generated. Thus, the moving object information detected from the distance image having high moving object detection sensitivity can be added to a camera image having high visibility, and thus, for example, it is possible to suitably support monitoring by the user.

Note that, by the image processing device 100 according to the present embodiment, it is possible to specify the temporal correspondence relationship between the generation timing of the distance image data and the generation timing of the camera image data without depending on the frame rate of the camera 300 or the laser radar 200. Thus, the image processing device 100 according to the present embodiment is also useful in that the moving object information Da detected on the basis of the distance image data can be added to the camera image data while freely changing the frame rate of the camera 300 or the laser radar 200 according to the use environment.

### (Second embodiment)

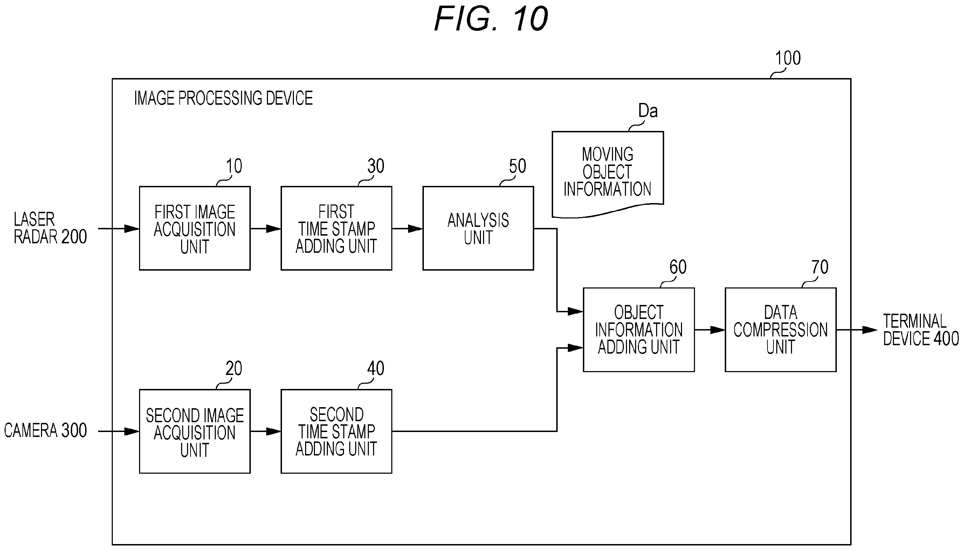

Next, a configuration of an image processing device 100 according to the second embodiment will be described with reference to Figs. 10 to 12.

Fig. 10 is a diagram illustrating an example of a configuration of the image processing device 100 according to the second embodiment. The image processing device 100 according to the present embodiment is different from the image processing device 100 according to the first embodiment in including a data compression unit 70. Note that description of configurations common to the first embodiment will be omitted.

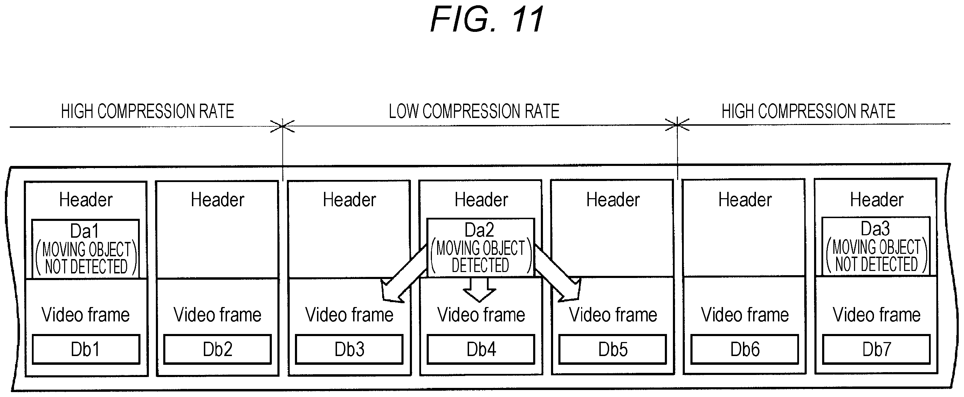

Fig. 11 is a diagram describing operation of the data compression unit 70 according to the present embodiment. Fig. 11 illustrates a data flow of the camera image data transmitted from the object information adding unit 60.

The data compression unit 70 acquires the camera image data sent from the object information adding unit 60 and performs data compression processing on the camera image data. Then, the data compression unit 70 transmits the camera image data subjected to the data compression processing to the terminal device 400.

Here, the data compression unit 70 changes the compression rate when performing the data compression processing on the camera image data on the basis of the moving object information Da added to the camera image data. Specifically, in a case where the moving object information Da added to the camera image data indicates the presence of a moving object, the data compression unit 70 reduces the compression rate when the data compression processing is performed on the camera image data, as compared with a case where the moving object information Da added to the camera image data does not indicate the presence of a moving object. Thus, it is possible to perform data compression on the camera image data so that the camera image data having high importance becomes a clear image while reducing the data amount for the camera image data having low importance.

Fig. 11 illustrates a mode in which the data compression processing is performed on the camera image data Db4 in which the presence of the moving object is detected and the previous or subsequent camera image data Db3 and Db5 thereof so that the compression rate is lower than that of the camera image data Db1, Db2, Db6, and Db7 in which the presence of the moving object is not detected.

Note that the "compression rate" mentioned here is a rate (= processed data/pre-processing data) indicating how much information amount of the original data the compressed data has been reduced to when the data is compressed, and indicates a state in which the data amount is reduced more as the compression rate is higher. Further, the data compression processing by the data compression unit 70 is similar to a known method, and for example, an MPEG system is used.

The data compression unit 70 changes, for example, the resolution of the camera image to be subjected to data compression or the frame rate of the camera image data to be subjected to data compression (that is, thinning out frames), thereby changing the compression rate when the data compression processing is performed on the camera image data.

Note that a reference at the time of performing data compression of the camera image data by the data compression unit 70 may be, for example, whether or not a moving object (for example, a person) as an attention target type appears in the camera image, or the like, instead of whether or not the moving object appears in the camera image.

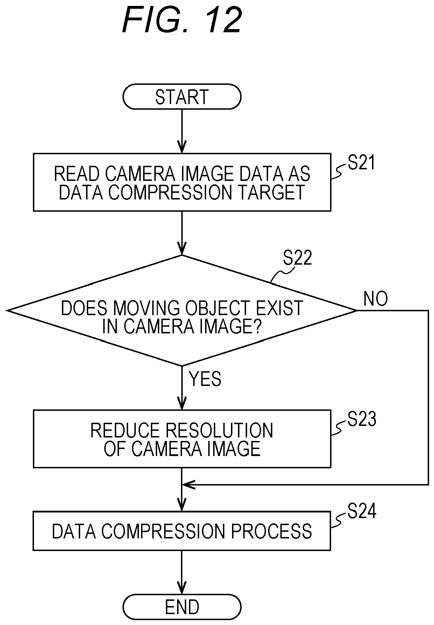

Fig. 12 is a flowchart illustrating an example of the operation of the data compression unit 70 according to the present embodiment.

In step S21, the data compression unit 70 reads the camera image data as a data compression target. Note that, at this time, the data compression unit 70 reads the time-series camera image data (in Fig. 12, camera image data for three frames including camera image data to which the distance image data is added and camera image data for one frame before and after the camera image data) at frame intervals at which the moving object information Da is added, for example.

In step S22, the data compression unit 70 determines whether or not the moving object information Da added to the camera image data indicates the presence of a moving object, and advances the processing to step S23 in a case where the moving object information Da added to the camera image data does not indicate the presence of a moving object (S22: YES), and advances the processing to step S24 in a case where the moving object information Da added to the camera image data indicates the presence of a moving object (S22: NO).

In step S23, the data compression unit 70 reduces image resolution of the camera image data, and then advances the processing to step S24. That is, here, the data compression unit 70 reduces the image resolution of the camera image data in which a moving object does not appear in the camera image.

In step S24, the data compression unit 70 performs the data compression processing on the camera image data as the data compression target. The data compression unit 70 transmits the camera image data subjected to the data compression processing to the terminal device 400 in this manner.

The data compression unit 70 sequentially executes the processing of such steps S21 to S24 while incrementing the frame number of the processing target in the time-series camera image data.

Note that, here, the number of frames referred to by the data compression unit 70 in one data compression is 3, but the number of frames is arbitrary. For example, before the data compression processing, the data compression unit 70 may detect a timing at which the camera image data related to the camera image in which the moving object does not appear is switched to the camera image data related to the camera image in which the moving object appears in the time-series camera image data, and perform the data compression processing in units of an arbitrary number of frames in each of the camera image data groups.

As described above, by the image processing device 100 according to the present embodiment, when the data compression is performed on the camera image data, the compression rate can be changed depending on whether or not a moving object appears in the camera image data. Thus, the data compression can be performed on the camera image data with high importance so as to obtain a clear image while reducing the data amount for the camera image data with low importance.

### (Other embodiments)

The present invention is not limited to the above embodiment, and various modifications are conceivable.

For example, in the embodiment described above, as an example of the object information adding unit 60, the mode has been described in which the moving object information Da of the distance image data is added to the camera image data generated at a time within the reference time width from the generation timing of the distance image data and after the generation timing of the distance image data. However, in the present invention, the object information adding unit 60 may add the moving object information Da of the distance image data to the camera image data generated at a time before the generation timing of the distance image data. Further, the object information adding unit 60 does not only add the moving object information Da to one piece of camera image data, but may also add the moving object information Da to data of a plurality of camera images in which a difference (Δt) between the generation timing of the distance image data and the generation timing of the camera image data is within the reference time width.

Further, in the above-described embodiment, as an example of the image processing device 100, the mode has been described in which the moving object information Da detected from the distance image data is added to the camera image data. However, in the present invention, the information added to the camera image data is not limited to the information related to the moving object, and may be information related to an arbitrary object detected from the distance image data.

Further, in the above-described embodiment, the application of detection of the moving object that enters the predetermined area has been described as an example of the application of the image processing device 100, but the application of the image processing device according to the present invention is not limited thereto. The image processing device according to the present invention may be mounted on a vehicle, for example, and may be applied to an application of detecting an object in front of the vehicle.

Further, in the above embodiment, the mode has been described in which a TOF laser radar is used as an example of the laser radar 200, but in the present invention, the configuration of the laser radar 200 is arbitrary. For example, an FMCW laser radar or the like may be used as the laser radar 200. Further, a stereo camera or a millimeter wave radar may be used as means for generating the distance image.

Further, in the above embodiment, the mode has been described in which the first time stamp adding unit 30 and the second time stamp adding unit 40 are provided in the image processing device 100. However, if the laser radar 200 and the camera 300 have clocking units temporally synchronized with each other, the first time stamp adding unit 30 and the second time stamp adding unit 40 may be incorporated in the laser radar 200 and the camera 300, respectively.

Although specific examples of the present invention have been described in detail above, these are merely examples and do not limit the scope of claims. The technology described in the claims includes various modifications and changes of the specific examples exemplified above.

The entire disclosure of the description, drawings, and abstract included in Japanese Patent Application No. 2019-219019 filed on December 3, 2019 is incorporated herein by reference.

### Industrial Applicability

By an image processing device according to the present invention, it is possible to add information of an object detected from a distance image to image data of a camera image.

### Reference Signs List

- U: Monitoring system
- 100: Image processing device
- 101: CPU
- 102: ROM
- 103: RAM
- 104: External storage device
- 105: Communication interface
- 10: First image acquisition unit
- 20: Second image acquisition unit
- 30: First time stamp adding unit
- 40: Second time stamp adding unit
- 50: Analysis unit
- 60: Object information adding unit
- 70: Data compression unit
- 200: Laser radar
- 300: Camera
- 400: Terminal device
- Da: Moving object information

## Claims

1. An image processing device comprising:
a first image acquisition unit that acquires first image data including one distance image among a plurality of distance images generated temporally continuously;
a second image acquisition unit that acquires second image data including one camera image among a plurality of camera images temporally continuously generated at a frame rate different from a frame rate of the first image data; and
a processing unit that performs processing of associating information of a distance image included in the first image data with the second image data on a basis of a time at which the first image data is generated and a time at which the second image data is generated.

2. The image processing device according to claim 1, wherein
the first image acquisition unit acquires the first image data from a laser radar.

3. The image processing device according to claim 1 or 2, wherein
the second image acquisition unit acquires the second image data from a camera.

4. The image processing device according to any one of claims 1 to 3, further comprising:
a first time stamp adding unit that adds a time stamp to the first image data when the first image data is acquired; and
a second time stamp adding unit that adds a time stamp to the second image data when the second image data is acquired.

5. The image processing device according to any one of claims 1 to 4, wherein
the processing unit adds information of an object in the predetermined area detected on a basis of the first image data to the second image data.

6. The image processing device according to claim 5, wherein
the object is a moving object.

7. The image processing device according to claim 5 or 6, wherein
the information of the object includes position information of the object.

8. The image processing device according to any one of claims 5 to 7, wherein
the information of the object includes size information of the object.

9. The image processing device according to any one of claims 5 to 8, wherein
the information of the object includes information related to a distance between the object and the laser radar.

10. The image processing device according to any one of claims 5 to 9, wherein
the information of the object includes information related to a movement trace of the object.

11. The image processing device according to any one of claims 5 to 10, wherein
the processing unit generates a composite image in which a marker indicating an existing position of the object is superimposed on the camera image.

12. The image processing device according to any one of claims 5 to 11, wherein
the processing unit generates a composite image in which a marker indicating a movement trace of the object is superimposed on the camera image.

13. The image processing device according to any one of claims 1 to 12, further comprising
an analysis unit that detects the object on a basis of the first image data in time series.

14. The image processing device according to any one of claims 1 to 13, further comprising
a data compression processing unit that performs data compression processing on the second image data,
wherein the data compression processing unit changes a compression rate when data compression processing is performed on the second image data on a basis of information of the object added to the second image data.

15. The image processing device according to claim 14, wherein
when the information of the object added to the second image data indicates presence of a moving object, the data compression processing unit reduces a compression rate when the data compression processing is performed on the second image data as compared with when the information of the object added to the second image data does not indicate the presence of the moving object.

16. The image processing device according to claim 3, wherein
a frame rate of the camera is variable.

17. A monitoring system comprising:
a laser radar that generates the first image data;
a camera that generates the second image data; and
the image processing device according to any one of claims 1 to 16 that associates the first image data generated by the laser radar with the second image data generated by the camera.

18. An image processing method comprising:
acquiring first image data including one distance image among a plurality of distance images generated temporally continuously;
acquiring second image data including one camera image among a plurality of camera images temporally continuously generated at a frame rate different from a frame rate of the first image data; and
performing processing of associating information of a distance image included in the first image data with the second image data on a basis of a time at which the first image data is generated and a time at which the second image data is generated.
